# EUROPEAN PATENT SPECIFICATION

(11) **EP 0 990 877 B1**
(45) Date of publication and mention of the grant of the patent: **03.12.2008**
(21) Application number: 99118984.6
(22) Date of filing: 27.09.1999
(51) Int. Cl.: G01F 15/06, G01F 15/075

(54) **Assembly for determining water consumption along a water mains intake pipe**
Anordnung zur Wasserverbrauchsbestimmung entlang des Eingangs des Wasserleitungsrohres
Ensemble pour la détermination de la consommation d' eau le long de l' entrée d' une conduite d' eau

(30) Priority: 28.09.1998 IT BO980547
(43) Date of publication of application: 05.04.2000
(73) Proprietor: Betadue Italia s.a.s. Ingegneria per la Vita di Bruno Barattini & C., 40125 Bologna (IT)
(72) Inventor: Barattini, Bruno, 40125 Bologna (IT)
(74) Representative: Cerbaro, Elena

(56) References cited:
- FR-A- 2 646 234
- FR-A- 2 653 554
- US-A- 5 659 300

## Description

The present invention relates to an assembly for determining water consumption along a water mains intake pipe.

The amount of water consumed by a user connected to a water mains intake is determined using a water meter located along the pipe defining the intake and for indicating the amount of water drawn from the water mains.

More specifically, water mains comprise a main meter installed at the intake supplying water to an entire building, and a number of subsidiary or divisional meters for individual users.

Currently used water meters, both main and divisional, comprise a supporting body; a turbine (or current meter or similar) housed inside the body and over which the water flows; and a series of gears (e.g. a reduction train and a total meter) activated by the turbine to indicate water consumption on a graduated dial normally on top of the supporting body.

Meter readers frequently encounter serious difficulty in reading graduated-dial-type meters, on account of the location of the meters, which are usually scattered throughout the building, often in confined spaces, and at times with the graduated dial facing a wall or other pipes preventing troublefree reading.

By way of a solution to the problem, water meters have been devised featuring a consumption display unit outside the supporting body and which may be located as required close to the water meter. One of the indicators on the graduated dial of such meters is defined by a magnet positioned, for example, facing a fixed coil to generate an electric pulse signal as it rotates and, hence, as water is consumed. More specifically, each pulse indicates a given amount of water supplied to the user; and the coil is connected to the display unit where the electric pulse signal is supplied to a pulse counter for showing on a display the amount of water consumed by the user.

All the water meters described above, however, call for a meter reader to record consumption at the actual intake, which, on the one hand, involves considerable cost on the part of the water board, and, on the other, fails to provide for totally up-to-date readings, on account of the meters only being read periodically (e.g. once a month), and the reading only providing information on a given total basis, i.e. referred to the two times defining the interval between two consecutive readings.

US-A-5 659 300 reveals an assembly for measuring the volumetric consumption and which document comprises the features defined in the preamble of claim 1.

It is an object of the present invention to provide an assembly for determining water consumption along a water mains intake pipe, designed to solve the above problem, i.e. which provides for automatically determining consumption without the assistance of a meter reader.

According to the present invention, there is provided an assembly for determining water consumption along a water mains intake pipe, as described in Claim 1.

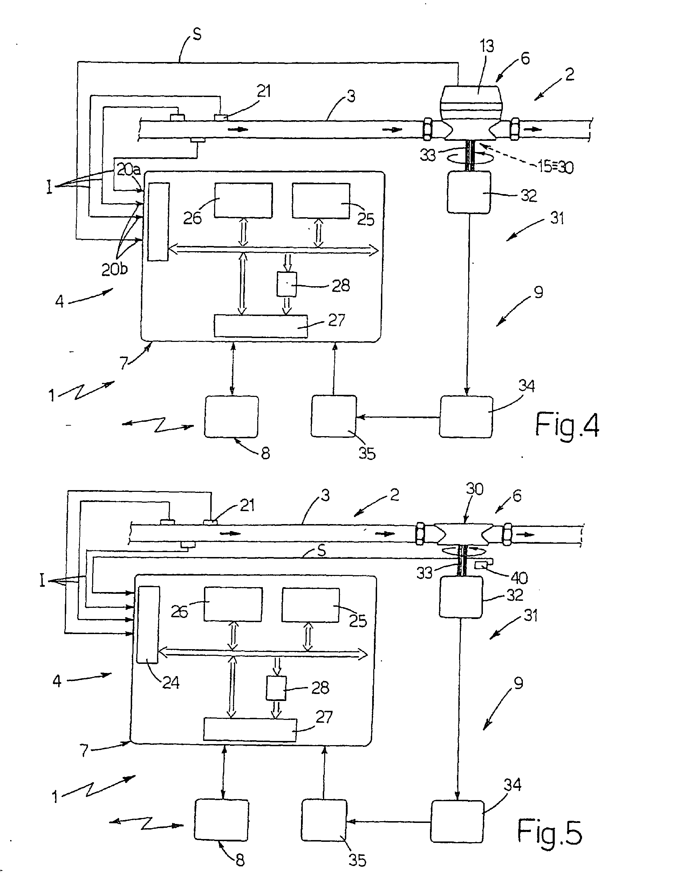

A non-limiting embodiment of the present invention will be described by way of example with reference to Figure 5.
Figure 1 shows, schematically, a possible assembly for determining water consumption along a water mains intake pipe which does not form part of the invention.
Figure 2 shows a view in perspective, with parts removed for clarity, of a water meter forming part of the Figure 1 assembly;
Figures 3 to 4 show, schematically, respective variations of the Figure 1 assembly.

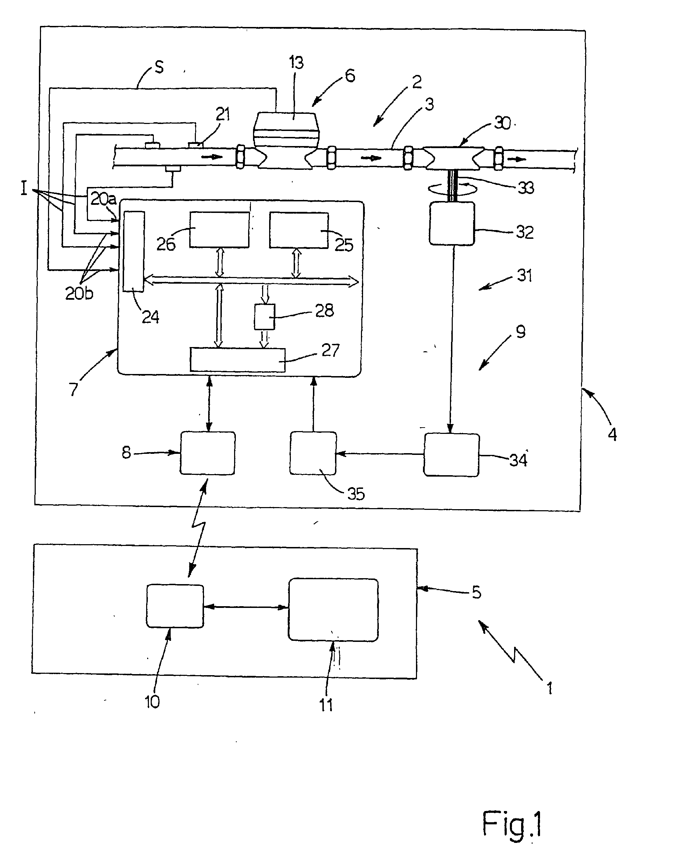

Number 1 in Figure 1 indicates as a whole an assembly for determining water consumption at an intake 2 of a water mains (not shown). Intake 2 is defined by an intake pipe 3 for supplying water to a user, which may, for example, be an entire building or a single apartment.

Assembly 1 comprises at least one remote consumption detecting unit 4 located at intake 2 to determine, process, memorize and transmit consumption data; and at least one central processing unit 5 situated in a remote location with respect to intake 2 and for receiving, processing and monitoring the data transmitted by remote detecting unit 4.

Remote unit 4 comprises a meter 6 located along pipe 3 to generate an electric signal S related to the water consumption of the user; an electronic processing device 7 supplied at the input with signal S and for processing and memorizing consumption data; a transceiver device 8 which cooperates with device 7 to transmit said data to central unit 5; and a supply device 9 for electrically supplying electronic processing device 7.

Central unit 5 comprises a transceiver device 10 for receiving data from remote unit 4; and a processing and monitoring unit 11 which cooperates with transceiver device 10 to process and monitor said data.

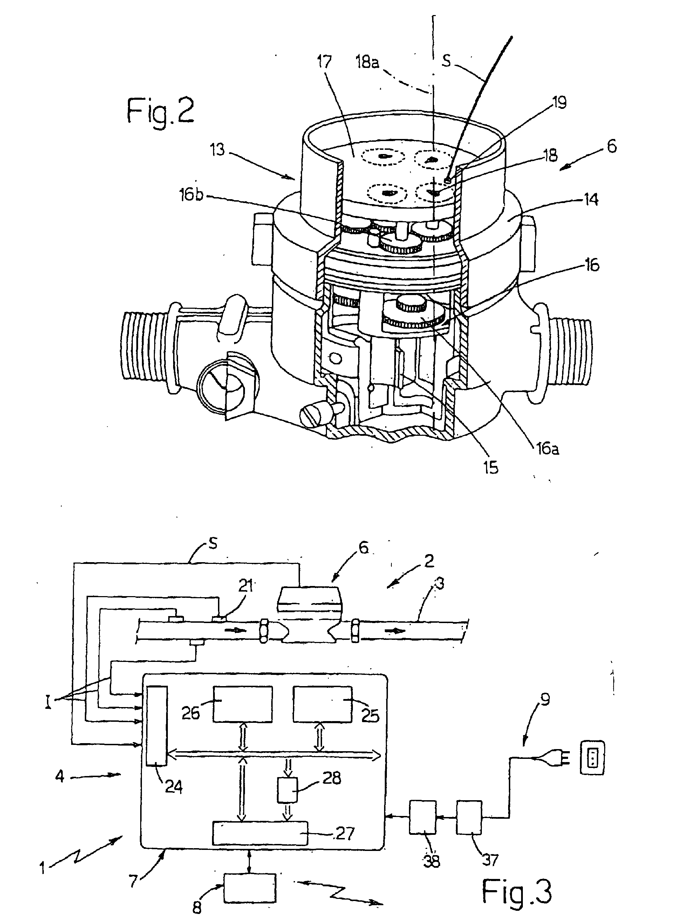

In the Figure 1 example, meter 6 is defined by a known water meter 13 (Figure 2) comprising a supporting body 14, a turbine (or current meter or similar) 15 housed inside body 14 and over which the water flows; and a series of gears 16 (e.g. a reduction train 16a and a total meter 16b) activated by turbine 15 to indicate water consumption on a graduated dial 17 normally located on top of supporting body 14.

One of the indicators on graduated dial 17 of meter 13 in Figure 2 - in particular, the minimum-flow indicator - is defined by a magnet 18 facing a fixed coil 19 and rotated about a respective axis 18a, so that, when water is supplied to the user, the variation in the polarity of magnet 18 induces on coil 19 electric signal S, which is a pulse signal wherein each pulse corresponds to the consumption of a given quantity of water (e.g. 1 liter).

Electronic processing device 7 comprises an input 20a receiving signal S; and, preferably but not necessarily, a number of inputs 20b, each of which is connected to the output of a respective sensor 21 located along pipe 3 to generate a respective information signal I indicating a respective physical quantity related to the passage of water along pipe 3. In the Figure 1 example, device 7 is connected to three sensors 21 : a first pressure sensor for detecting the pressure of the water in pipe 3; a second sensor for detecting radial deformation of pipe 3; and a third temperature sensor for detecting the temperature of the water.

Device 7 comprises an input unit 24 receiving signals S and I; a microprocessor control unit 25 cooperating with input unit 24 and for processing signals S and I to determine the amount of water consumed and other data of interest (e.g. the water pressure in the pipe, etc.); and a memory 26 for memorizing, at a predetermined rate, data relative to consumption and any other quantities of interest. In this way, a constant track is kept on developments in the amount of water consumed and in other quantities of interest.

Control unit 25 cooperates with an interface 27 interfacing with transceiver device 8, and, in the embodiment shown, compares consumption data and data relative to other quantities of interest, in predetermined manner, with reference data to immediately determine any anomalous situations, such as a sharp variation in pressure in the pipe, or hazardous situations such as a leak. Control unit 25, in fact, is connected to a signaling and/or alarm device 28 which cooperates with transceiver device 8 to transmit an alarm signal to central unit 5 in the event of a given deviation between the detected and reference data.

Transceiver device 8, shown schematically in Figure 1, may be defined, for example, by a transmitter-receiver radio, a cellular phone, a cable (optical-fiber) transceiving device or similar, and transmits the memorized data and alarm signals by request of central unit 5 and/or independently.

In the example shown, processing and monitoring unit 11 of central unit 5 is defined by a computer which cooperates with transceiver device 10 to receive and/or request data from remote unit 4, and which provides for processing and displaying user consumption data - and, obviously, data relative to other quantities of interest - with no need for physically inspecting intake 2.

One central unit 5 may, obviously, cooperate with a given number N of remote units 4, each located in a respective water mains pipe 3 to determine the consumption of a respective user.

Supply device 9, as stated, provides for electrically supplying electronic processing device 7, and, according to the invention, may be formed in three ways, as described below.

Figure 1 shows a first embodiment of supply device 9, wherein device 7 is supplied electrically by exploiting the kinetic energy of the water flowing along pipe 3. More specifically, supply device 9 comprises a turbine 30 housed inside pipe 3, downstream (or upstream) from meter 13, to generate mechanical energy when pressurized water flows over it; and a converting device 31 connected to turbine 30 to convert the mechanical energy into electric energy and supply device 7.

Converting device 31 comprises an electric generator 32 connected mechanically to the output shaft 33 of turbine 30 to generate a voltage as water flows along pipe 3; and an electric converter 34 connected to electric generator 32 to convert the output voltage from the generator into a voltage with which to supply electronic processing device 7. To ensure continuous electric supply of device 7, converting device 31 comprises a standby battery 35 parallel to electric converter 34, and which is charged by electric converter 34 and supplies voltage to device 7 even when no water is supplied to the user.

In the example shown, electric generator 32 is defined by an alternator supplying an alternating output voltage, and electric converter 34 is defined by a known rectifier for converting the alternating voltage into direct voltage.

This type of supply device 9 is especially suitable for remote units 4 installed at distribution nodes some distance from the electricity mains.

Figure 3 shows a second alternative of supply device 9, which is especially suitable for remote units 4 installed at distribution nodes close to the electricity mains. In this case, in fact, supply device 9 comprises a transformer 37 connected to the electricity mains to convert the mains voltage into a voltage with which to supply electronic processing device 7; and an auxiliary standby battery 38 for electrically supplying electronic processing device 7 in the absence of mains voltage.

In the third embodiment of supply device 9, device 9 is defined by an ordinary battery for independently supplying electronic processing device 7.

Figure 4 shows a variation of the Figure 1 assembly 1, wherein turbine 30 is integrated directly inside water meter 13, and in particular is defined by the actual turbine 15 of meter 13; and the shaft of turbine 15 extends outside supporting body 14 for connection to electric generator 32.

In the Figure 5 which represents an assembly according to the invention , meter 6 has no meter 13, and is defined solely by turbine 30 and by an angular-position sensor 40 located at output shaft 33 to generate pulse signal S related to the amount of water consumed. Each pulse indicates rotation of output shaft 33 by a given angle, i.e. a given amount of water supplied.

The assembly according to the invention has the advantage of enabling automatic reading of the meters, as well as monitoring the water mains as a whole and immediately preventing or indicating any malfunctions. Moreover, the high degree of flexibility of the system provides for troublefree installation at water mains distribution nodes, be they centralized nodes connected to an entire building, or individual nodes connected to individual users.

It should also be stressed that the possibility of supplying the electronic processing device using the pressure of the water in the pipe (which normally ranges between 6 and 12 atmospheres) enables the remote unit to be used even in places in which electric energy from the mains is particularly difficult to provide.

## Claims

1. An assembly for determining water consumption along a water mains intake pipe (3), the assembly comprising at least one remote detecting unit (4) having a meter (6) located at the intake pipe (3) and for generating an output signal (S) related to water consumption by a user connected to said in take pipe (3); wherein said remote detecting unit (4) comprises:
- an electronic processing device (7) cooperating with the meter (6) to receive and process the output signal (S) and to memorize data relative to water consumption by the user;
- electric supply means (9) for electrically supplying the electronic processing device (7);
- a converting device (31) to convert the mechanical energy into electric energy and electrically supply said electronic processing device (7); and
- a transmitting device (8) cooperating with the electronic processing device (7) and for transmitting the memorized data;
- the assembly also comprising at least one central processing unit (5), which is situated in a remote location with respect to the intake pipe (3), has a receiving device (10) for receiving the data transmitted by the remote detecting unit (4), and has a processing and monitoring unit (11) for processing and monitoring said data;
the assembly being **characterized in that**
said converting device (31) comprises an electric generator (32) connected mechanical to a turbine (30) to convert the mechanical energy from the turbine (30) into electric energy only; an electric converter (34) connected to the electric generator (32) to convert the voltage from the electric generator (32) into a supply voltage for the electronic processing device (7); and a standby battery (35) charged by the electric converter (34) to supply the electronic processing device (7) in the absence of water flow along said intake pipe (3): and **in that**
the turbine (30) for produding electricity only is located along said intake pipe (3) and has an output shaft (33) extending outside the intake pipe (3) and connected to the electric generator (32); said meter (6) comprising position sensing means (40) located at said output shaft (33) to generate said output signal (S) related to water consumption, and to supply the output signal to said electronic processing device (7).

2. An assembly as claimed in Claim 1, **characterized in that** said electric generator (32) is an alternator connected to an output shaft (33) of said turbine (30) to generate an alternating voltage; and **in that** said electric converter (34) is a rectifier for converting the alternating voltage into a direct voltage; the standby battery (35) being parallel to the rectifier to guarantee constant supply to said electronic processing device (7).

3. An assembly as claimed in any one of the foregoing Claims, **characterized in that** said receiving device (10) of the central processing unit (5) also comprises transmitting means (10) for transmitting data and/or information requests to said remote detecting unit (4); said transmitting device (8) of the remote detecting unit (4) comprising receiving means (8) for receiving said data and/or said information requests.

4. An assembly as claimed in any one of the foregoing Claims, **characterized in that** said transmitting device (8) of the remote detecting unit (4) comprises transmitting-receiving means, such as radio transmitter-receivers, cellular phones or cable transmitting-receiving means.

5. An assembly as claimed in any one of the foregoing Claims, **characterized in that** said remote detecting unit (4) also comprises at least one auxiliary sensor (21) located at said intake pipe (3) to generate a respective information signal (I) indicating a respective physical quantity related to the passage of water along said intake pipe (3); said electronic processing device (7) receiving and processing said information signal (I) to obtain and memorize information relating to the physical quantity.

6. An assembly as claimed in Claim 14, **characterized in that** said auxiliary sensor (21) is a pressure sensor generating an information signal (I) indicating the pressure of the water in the intake pipe (3).

7. An assembly as claimed in any one of the foregoing Claims, **characterized in that** said electronic processing device (7) comprises comparing means (25) for comparing the memorized data with reference data; and signaling means (28) cooperating with said transmitting device (8) to generate an alarm signal in the event of a given deviation between said memorized data and said reference data.

## Patentansprüche

1. Anordnung zur Wasserverbrauchsbestimmung entlang eines Wasserhauptzuführungsrohres (3), die mindestens eine separate Erfassungseinheit (4) mit einem Meßgerät (6) umfaßt, zur Erzeugung eines Ausgangssignales (S) im Bezug auf den Wasserverbrauch eines Benutzers, das an dem Zuführungsrohr (3) angeordnet und mit diesem verbunden ist; wobei die separate Erfassungseinheit (4) folgendes umfaßt:
- eine elektronische Verarbeitungseinheit (7), die mit dem Meßgerät (6) zusammenwirkt und die das Ausgangssignal (S) empfängt und verarbeitet und die Daten im Bezug auf den Wasserverbrauch durch den Benutzer speichert,
- elektrische Energieversorgungsmittel (9) zur Elektrizitätsversorgung der elektronischen Verarbeitungseinheit (7),
- eine Umwandlungseinheit (31) zur Umwandlung mechanischer Energie in elektrische Energie, um die elektronische Verarbeitungseinheit (7) mit Elektrizität zu versorgen und
- eine Übertragungseinheit (8), die mit der elektronischen Verarbeitungseinheit (7) zusammenwirkt und die gespeicherten Daten überträgt,
die Anordnung umfaßt ebenfalls mindestens eine zentrale Steuereinheit (5), die im Bezug auf das Zuführungsrohr (3) separat angeordnet ist und eine Empfangseinheit (10), die die von der separaten Erfassungseinheit (4) gesendeten Daten empfängt, sowie eine Verarbeitungs- und Überwachungseinheit (11) zur Verarbeitung und Überwachung der Daten,
**dadurch gekennzeichnet, daß**
- die Umwandlungseinheit (31) einen Generator (32) zur Umwandlung mechanischer Energie von einer Turbine (30) in elektrische Energie umfaßt und mechanisch mit der Turbine (30) verbunden ist,
- die Anordnung einen elektrischen Konverter (34) umfaßt, der mit dem Generator (32) zur Umwandlung der Spannung des Generators (32) in Versorgungsspannung für die elektronische Verarbeitungseinheit (7) verbunden ist,
- die Anordnung eine Standby Batterie (35) umfaßt, die durch den elektrischen Konverter (34) geladen wird und bei Ausbleiben des Wasserflusses entlang des Zuführungsrohres (3) die elektronische Verarbeitungseinheit (7) versorgt,
- die Turbine (30), die ausschließlich Elektrizität produziert und entlang des Zuführungsrohres (3) angeordnet ist, eine Abgangswelle (33) umfaßt, die sich über die Außenseite des Zuführungsrohres erstreckt und mit dem Generator (32) verbunden ist,
- das Meßgerät (6) Mittel zur Positionsbestimmung (40) umfaßt, die an der Abgangswelle (33) angeordnet sind und die das Ausgangssignal (S) im Bezug auf den Wasserverbrauch für die elektronische Verarbeitungseinheit (7) erzeugt.

2. Anordnung nach Anspruch 1,
**dadurch gekennzeichnet, daß**
- es sich bei dem Generator (32) um einen Wechselstromgenerator handelt, der mit der Abgangswelle (33) der Turbine (30) verbunden ist und eine Wechselspannung erzeugt,
- es sich bei dem elektrischen Konverter (34) um einen Gleichrichter zur Umwandlung der Wechselspannung in Gleichspannung handelt und
- die Standby Batterie (35) parallel zu dem Gleichrichter gewährleistet, daß die elektronische Verarbeitungseinheit (7) konstant versorgt wird.

3. Anordnung nach einem der vorhergehenden Ansprüche,
**dadurch gekennzeichnet, daß**
- die Empfangseinheit (10) der zentralen Steuereinheit (5) ebenfalls Übertragungsmittel (10) umfaßt, die die Daten und/oder angeforderten Informationen zu der separaten Erfassungseinheit (4) überträgt und
- die Übertragungseinheit (8) der separaten Erfassungseinheit (4) Empfangsmittel (8) umfaßt, die die Daten und/oder angeforderten Informationen empfängt.

4. Anordnung nach einem der vorhergehenden Ansprüche,
**dadurch gekennzeichnet, daß**
die Übertragungseinheit (8) der separaten Erfassungseinheit (4) Sende-/ Empfangsmittel umfaßt, wie z. B. Mittel für Funksender/-empfänger, Mobiltelefone oder Sende-/Empfangsleitungen.

5. Anordnung nach einem der vorhergehenden Ansprüche,
**dadurch gekennzeichnet, daß**
- die separate Erfassungseinheit (4) ebenfalls mindestens einen Zusatzsensor (21) umfaßt, der an dem Zuführungsrohr (3) angeordnet ist und bei einer entsprechenden physischen Menge an Wasserdurchlauf entlang des Zuführungsrohres (3) ein entsprechendes Informationssignal (I) erzeugt und
- die elektronische Verarbeitungseinheit (7) das Informationssignal (I) zur Gewinnung und Speicherung der Informationen im Bezug auf die physische Menge empfängt und verarbeitet.

6. Anordnung nach Anspruch 14,
**dadurch gekennzeichnet, daß**
es sich bei dem Zusatzsensor (21) um einen Drucksensor handelt, der zur Information des Wasserdrucks in dem Zuführungsrohr ein Informationssignal (I) erzeugt.

7. Anordnung nach einem der vorhergehenden Ansprüche,
**dadurch gekennzeichnet, daß**
die elektronische Verarbeitungseinheit (7) Vergleichsmittel (25) für den Vergleich der gespeicherten Daten mit den Referenzdaten sowie Signalmittel (28) umfaßt, die mit der Übertragungseinheit (8) zusammenwirken und bei Abweichung der gespeicherten Daten von den Referenzdaten ein Alarmsignal erzeugen.

## Revendications

1. Ensemble pour la détermination de la consommation d'eau le long d'un tube d'entrée de conduite d'eau (3), l'ensemble comprenant au moins une unité de détection à distance (4) ayant un dispositif de mesure (6) situé au niveau du tube d'entrée (3) et pour générer un signal de sortie (S) relatif à la consommation d'eau par un utilisateur relié au dit tube d'entrée (3) ; dans lequel ladite unité de détection à distance (4) comprend :
- un dispositif de traitement électronique (7) coopérant avec le dispositif de mesure (6) pour recevoir et traiter le signal de sortie (S) et pour mémoriser des données relatives à la consommation d'eau par l'utilisateur ;
- des moyens d'alimentation électrique (9) pour alimenter électriquement le dispositif de traitement électronique (7) ;
- un dispositif convertisseur (31) pour convertir l'énergie mécanique en énergie électrique et alimenter électriquement ledit dispositif de traitement électronique (7) ; et
- un dispositif émetteur (8) coopérant avec le dispositif de traitement électronique (7) et transmettant les données mémorisées ;
- l'ensemble comprenant également au moins une unité centrale de traitement (5), qui est située dans un emplacement éloigné par rapport au tube d'entrée (3), a un dispositif récepteur (10) pour recevoir les données transmises par l'unité de détection à distance (4) et a une unité de traitement et surveillance (11) pour traiter et surveiller lesdites données ;
l'ensemble étant **caractérisé en ce que**
ledit dispositif convertisseur (31) comprend un générateur électrique (32) connecté mécaniquement à une turbine (30) pour convertir l'énergie mécanique provenant de la turbine (30) en énergie électrique seulement ; un convertisseur électrique (34) connecté au générateur électrique (32) pour convertir la tension provenant du générateur électrique (32) en une tension d'alimentation pour le dispositif de traitement électronique (7) ; et une batterie de secours (35) chargée par le convertisseur électrique (34) pour alimenter le dispositif de traitement électronique (7) en l'absence d'écoulement d'eau le long dudit tube d'entrée (3) ;
et **en ce que**
la turbine (30) pour produire seulement de l'électricité est située le long dudit tube d'entrée (3) et a un arbre de sortie (33) s'étendant à l'extérieur du tube d'entrée (3) et relié au générateur électrique (32) ; ledit dispositif de mesure (6) comprenant des moyens de détection de position (40) situés au niveau dudit arbre de sortie (33) pour générer ledit signal de sortie (S) relatif à la consommation d'eau et pour délivrer le signal de sortie au dit dispositif de traitement électronique (7).

2. Ensemble selon la revendication 1, **caractérisé en ce que** ledit générateur électrique (32) est un alternateur relié à un arbre de sortie (33) de ladite turbine (30) pour générer une tension alternative ; et **en ce que** ledit convertisseur (34) est un redresseur pour convertir la tension alternative en une tension continue ; la batterie de secours (35) étant en parallèle avec le redresseur pour garantir une alimentation constante pour ledit dispositif de traitement électronique (7).

3. Ensemble selon l'une quelconque des revendications précédentes, **caractérisé en ce que** ledit dispositif récepteur (10) de l'unité centrale de traitement (5) comprend également des moyens de transmission (10) pour transmettre des données et/ou des requêtes d'informations à ladite unité de détection à distance (4) ; ledit dispositif émetteur (8) de l'unité de détection à distance (4) comprenant des moyens de réception (8) pour recevoir lesdites données et/ou lesdites requêtes d'informations.

4. Ensemble selon l'une quelconque des revendications précédentes, **caractérisé en ce que** ledit dispositif émetteur (8) de l'unité de détection à distance (4) comprend des moyens émetteurs/récepteurs, tels que des émetteurs/récepteurs radio, des téléphones cellulaires ou des moyens émetteurs/récepteurs câblés.

5. Ensemble selon l'une quelconque des revendications précédentes, **caractérisé en ce que** ladite unité de détection à distance (4) comprend également au moins un capteur auxiliaire (21) situé au niveau dudit tube d'entrée (3) pour générer un signal d'informations respectif (I) indiquant une quantité physique respective relative au passage d'eau le long dudit tube d'entrée (3) ; ledit dispositif de traitement électronique (7) recevant et traitant ledit signal d'informations (I) pour obtenir et mémoriser des informations relatives à la quantité physique.

6. Ensemble selon la revendication 5, **caractérisé en ce que** ledit capteur auxiliaire (21) est un capteur de pression générant un signal d'informations (I) indiquant la pression de l'eau dans le tube d'entrée (3).

7. Ensemble selon l'une quelconque des revendications précédentes, **caractérisé en ce que** ledit dispositif de traitement électronique (7) comprend des moyens de comparaison (25) pour comparer les données mémorisées avec des données de référence ; et des moyens de signalisation (28) coopérant avec ledit dispositif de transmission (8) pour générer un signal d'alarme dans le cas d'un écart déterminé entre lesdites données mémorisées et lesdites données de référence.
